(19) Europäisches Patentamt

European Patent Office

Office européen des brevets

(11) EP 0 842 684 A1

(12) **EUROPEAN PATENT APPLICATION**
published in accordance with Art. 158(3) EPC

(43) Date of publication:
20.05.1998 Bulletin 1998/21

(51) Int. Cl.$^6$: **B01D 1/26**, C02F 1/04

(21) Application number: 96922235.5

(86) International application number:
PCT/JP96/01864

(22) Date of filing: 05.07.1996

(87) International publication number:
WO 97/02078 (23.01.1997 Gazette 1997/05)

(84) Designated Contracting States:
DE GB

(30) Priority: 05.07.1995 JP 169646/95

(71) Applicant:
NOMURA MICRO SCIENCE CO., LTD.
Atsugi-shi, Kanagawa 243 (JP)

(72) Inventor: OHTA, Yoshiharu
Atsugi-shi, Kanagawa 243 (JP)

(74) Representative: Gill, David Alan
W.P. Thompson & Co.,
Celcon House,
289-293 High Holborn
London WC1V 7HU (GB)

(54) **DISTILLATION APPARATUS**

(57) An inexpecnsive distillation apparatus which has a simple construction and enables the sterilization to be performed simultaneously in a short time. It can enhance the efficiency of separating fine particles from steam in a still and the percentage heat exchange for the conversion of feed water to steam, prevent the contamination of the interior of the still with fine particles or the like, and minimize the residence of distilled water to prevent contamination with fine particles or the like.

FIG. 1

EP 0 842 684 A1

**Description**

TECHNICAL FIELD

The invention relates to a distillation apparatus for producing distilled water which is extensively used in pharmaceutical factories, medical treating scenes and the like, and more particularly a distillation apparatus which has a simple construction and enables the sterilization to be performed simultaneously in a short time, and which enhances the efficiency of separating impurities such as fine particles from steam in a still and the percentage heat exchange for the conversion of feed water to steam, prevents the contamination of the interior of the still with the impurities such as fine particles, and minimizes the residence of distilled water to prevent contamination with the impurities such as fine particles.

BACKGROUND ART

Generally, water for medical and drug manufacturing use is produced from raw water by removing impurities such as fine particles, silica, bacteria, various ionic components, water-soluble organic substances or pyrogens therefrom. However, if impurities are taken into a living body due to water for medical and drug manufacturing use from which impurities are not removed completely, the living body suffers from symptoms such as fever or shock involved in defense reactions and is confronted with a crisis of life.

Therefore, water for medical and drug manufacturing use, which is used for washing involved in the production of various kinds of medical supplies and producing them or for preparing a medicine, injecting and operating at medical treating scenes, is demanded to have water quality with a high degree of purity. Among others, the most strict standard is set for water for an injection to be directly given to a living body, and according to the 12th Amended Japanese Pharmacopoeia Water Quality Standards, fine particles in water for an injection is defined that fine particles having a particle diameter of 10 μm or more are 20 or below in 1 ml of water for an injection.

To achieve the water quality standard required for water for medical and drug manufacturing use, distillation apparatuses for separating to remove impurities such as fine particles from feed water include an apparatus which has a construction that a still has a triple bottom and a spiral fin is disposed in a space between an inner cylinder and a middle cylinder to make steam turn so that fine particles and the like removed from steam by a separating action by turning are removed into a space between the middle cylinder and an outer cylinder, and an apparatus which has a construction that a spiral fin is disposed between a circular space formed between an inner cylinder and an outer cylinder to turn steam in the circular space to remove fine particles and the like from steam and a demister is disposed at the upper part of the circular space. Generally, the apparatuses described above are provided with a plurality of stills and one preheating device for each still to preheat feed water to be fed to the stills. And, to cool the distilled water produced, a condenser having a water-running pipe therein to let cooling water pass is disposed, but the water-running pipe is a U-tube or spiral tube.

The spiral fin in the above apparatuses is fixed to the cylinder as the base material by welding. Where the spiral fin is welded to the cylinder as the base material, spot welding is generally employed, but it is technically hard to fix the spiral fin to the cylinder by welding, and fixing precision of the fin to the cylinder as the base material is lowered. Therefore, there were disadvantages that a turning force of steam was not increased, and the efficiency of removing the fine particles and the like was low. And, since a travel speed of steam along the fin in the still was lowered and a temperature of steam was lowered in the still, there was a drawback that a percentage heat exchange was degraded when steam supplied from the former still to the next still was used to convert the feed water supplied to the next still into steam. Furthermore, there was a drawback that a preheating efficiency of the feed water by steam in the preheating device was also lowered. And, since welded parts were caused to have uneven parts due to melting of the base material while welding, there was a disadvantage that the fine particles and the like adhered to the uneven surface of the welded parts cause contamination.

And, since the above apparatuses had one preheating device to correspond to one still to preheat the feed water to be supplied to the stills, there were disadvantages that the construction of the distillation apparatus became complex as the whole, and an occasion that the distillation apparatus is contaminated with the fine particles and the like was increased.

In addition, since the water-running pipes for passing the cooling water were U-tubes or spiral tubes, there were disadvantages that the distilled water tended to reside in the neighborhood of the water-running pipes, contaminating the condenser.

Moreover, since water supply piping was also disposed in the condenser in order to preheat the feed water, it became the cause of the contamination of the condenser, and since the feed water was needed to be passed through the condenser interior when the distillation apparatus was sterilized, there was a disadvantage that a long time was needed before the condenser interior reached a sterilization temperature.

An object of the present invention is to provide a distillation apparatus, which enables the removal of impurities such as fine particles from steam with high efficiency.

Another object of the invention is to provide a distillation apparatus which enhances a percentage heat exchange to convert feed water fed to the next still into steam with steam fed from the former still to the next still.

Still another object of the invention is to provide a distillation apparatus, which enables the washing and sterilization of the apparatus as the whole in a short time.

And, an additional object of the invention is to provide a distillation apparatus, which prevents the contamination of the interior of the still with impurities such as fine particles and the contamination of the interior of the condenser.

Furthermore, another object of the invention is to provide an inexpensive distillation apparatus, which has a simple construction as the whole.

DISCLOSURE OF INVENTION

A distillation apparatus of the invention comprises a still having an inner cylinder which is produced by cutting out of a metal cylinder and concealed airtight with a spiral fin formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder.

And, a distillation apparatus of the invention comprises a still having an inner cylinder which is concealed airtight with a spiral fin having an fitting error of ±1 mm/1.5 mm at most formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder.

Furthermore, a distillation apparatus of the invention comprises multiple steps of stills having an inner cylinder which is produced by cutting out of a metal cylinder and concealed airtight with a spiral fin formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder; a preheating device which preheats feed water supplied to the tube pipe of a first-step still; drain piping which discharges drainage from the bottom of the inner cylinder of the first-step still; distilled water collecting piping which collects as distilled water the drainage produced on the bottom of the inner cylinder into a second-step still and thereafter; steam piping which supplies external steam from the upper part of the inner cylinder of the first-step still; steam piping which connects the upper part of a steam passage formed between the outer cylinder and the inner cylinder and the upper part of the inner cylinder of the next-step still to respective stills from the first-step to the step before the final-step to supply steam raised between the outer cylinder and the inner cylinder of the respective stills to the upper part of the inner cylinder of the next-step still; and water supply piping, which supplies the drainage produced on the bottom of the outer cylinder of the respective stills to a tube pipe of the next step, fixed to the respective stills from the first-step to the step before the final-step; drain piping, which discharges the drainage from the bottom of the outer cylinder, fixed to the final-step still; a first condenser which has a thin pipe running through its interior and converts steam into condensed water; a second condenser which is connected to the first condenser, has a thin pipe running through its interior and converts steam into condensed water; and steam piping which sends steam from the upper part of the steam passage of the final-step still to the first condenser.

And, a distillation apparatus of the invention comprises multiple steps of stills having an inner cylinder which is concealed airtight with a spiral fin having an fitting error of ±1 mm/1.5 mm at most formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder; a preheating device which preheats feed water supplied to the tube pipe of a first-step still; drain piping which discharges drainage from the bottom of the inner cylinder of the first-step still; distilled water collecting piping which collects as distilled water the drainage produced on the bottom of the inner cylinder into a second-step still and thereafter; steam piping which supplies external steam from the upper part of the inner cylinder of the first-step still; steam piping which connects the upper part of a steam passage formed between the outer cylinder and the inner cylinder and the upper part of the inner cylinder of the next-step still to respective stills from the first-step to the step before the final-step to supply steam raised between the outer cylinder and the inner cylinder of the respective stills to the upper part of the inner cylinder of the next-step still; and water supply piping, which supplies the drainage produced on the bottom of the outer cylinder of the respective stills to a tube pipe of the next step, fixed to the respective stills from the first-step to the step before the final-step; drain piping, which discharges the drainage from the bottom of the outer cylinder, fixed to the final-step still; a first condenser which has a thin pipe running through its interior and converts steam into condensed water; a second condenser which is connected to the first condenser, has a thin pipe running through its interior and converts steam into condensed water; and steam piping which sends steam from the upper part of the steam passage of the final-step still to the first condenser.

In the distillation apparatus according to the invention, the preheated feed water is supplied from the upper part of the inner cylinder to the tube pipe running through the inner cylinder of the still. Meanwhile, saturated steam is externally supplied from the upper part of the inner cylinder so to be charged into the inner cylinder of the still. The feed water introduced from the upper part of the inner cylinder of the still is sent down through the tube pipe running through the inner cylinder of the still, in which the saturated steam is charged, toward the lower part of the inner cylinder, changed to steam by heat of the saturated steam during its process, and injected from the lower part of the inner cylinder of the still. The steam injected from the lower part of the inner cylinder of the still rises upward through the steam passage formed between the inner cylinder and the outer cylinder while turning in a spiral by a cyclone effect of the fin disposed on the outer periphery of the inner cylinder. At the time, impurities such as fine particles contained in the steam are removed, and recovered into a pocket formed on the periphery of the outer cylinder. Thus, steam with the impurities such as fine particles removed is obtained as distilled water from the upper part of the inner cylinder.

And, in the distillation apparatus of the invention, the feed water which becomes treated water is preheated by passing through the tube pipe in the preheating device in which the saturated steam is introduced, and supplied from the upper part of the inner cylinder of the tube pipe running through the inner cylinder of the first-step still. Meanwhile, the saturated steam is supplied from the upper part of the inner cylinder so to be charged into the inner cylinder of the first-step still. The feed water introduced from the upper part of the inner cylinder of the first-step still is sent to the lower part of the inner cylinder through the tube pipe running through the inner cylinder of the first-step still into which the saturated steam is filled, partly changed into steam while being sent by heat of the saturated steam, and injected from the lower part of the inner cylinder of the first-step still. Feed water which was not changed to steam resides on the bottom of the outer cylinder of the first-still to become a water supply source which is supplied from the upper part of the inner cylinder to the tube pipe running through the inner cylinder of the second still. Steam injected from the lower part of the inner cylinder of the first-step still rises upward through the steam passage formed between the inner cylinder and the outer cylinder while turning in a spiral by a cyclone effect of the fin disposed on the outer periphery of the inner cylinder. At the time, impurities such as fine particles contained in the steam are removed and recovered into the pocket formed on the periphery of the outer cylinder. And, the saturated steam introduced into the inner cylinder of the first-step still is supplied to the preheating device substantially in the state of the saturated steam.

Then, steam, from which the impurities such as fine particles were removed in the first-step still, is supplied from the upper part of the inner cylinder so to be charged into the inner cylinder of the second still. Meanwhile, the feed water, which was produced on the bottom in the outer cylinder of the first still and not changed to steam in the first still, is supplied from the upper part of the inner cylinder as the feed water into the tube pipe running through the inner cylinder of the second still. And, the feed water supplied from the upper part of the inner cylinder of the second still is sent toward the lower part of the inner cylinder through the tube pipe running through the inner cylinder filled with steam from which the impurities such as fine particles removed in the first-step still, partly changed into steam while being sent by heat of the steam from which the impurities such as fine particles were removed in the first-step still, and injected from the lower part of the inner cylinder of the second still. The feed water not changed to steam resides on the bottom of the outer cylinder of the second still and becomes the water source to be introduced from the upper part of the inner cylinder to the tube pipe running through the inner cylinder of the third still. The steam injected from the lower part of the inner cylinder of the second still rises upward through the steam passage formed between the inner cylinder and the outer cylinder while turning in a spiral by a cyclone effect of the fin disposed on the outer periphery of the inner cylinder with the impurities such as fine particles removed from the steam, and the impurities such as fine particles are recovered in the pocket disposed on the periphery of the outer cylinder. And, the steam introduced into the inner cylinder of the second still partly becomes drainage by the heat exchange with the feed water and is collected as distilled water into the first condenser.

Then, in the same way, the feed water is distilled in the subsequent-step stills and collected as the distilled water into the first condenser.

In the last still, the steam from which the impurities such as fine particles are removed is collected as it is into the first condenser, while the feed water which was supplied from the former step and not changed to steam is discharged outside from the bottom of the outer cylinder of the last still through the drain pipe.

And, the feed water collected into the first condenser is supplied to the second condenser and cooled further.

Now, a system of separating the impurities such as fine particles from the feed water in this invention will be described.

In the present invention, a centrifugal method by a spiral guide mechanism using a spiral fin is employed in order to remove efficiently the impurities such as fine particles from the feed water which was changed to steam.

When water changes to steam, a volume density increases from 1 to 22400/18, namely to about 1240 times. By virtue of the centrifugal function by a spiral guide mechanism and a high linear speed utilizing the acceleration owing to such a sharp change in volume, the impurities such as fine particles are removed from the steam based on a slight difference in specific gravity. When the spiral guide mechanism is not provided, the linear speed is about 1.5 to 2 m/sec, but it becomes about 7 to 16 m/sec. by the distillation apparatus of the invention provided with the spiral guide mechanism, so that the impurities such as fine particles are removed from the steam with high efficiency.

Then, the minimum particle diameter of the impurities such as fine particles removable by the centrifugal function described above is calculated based on hydrodynamics as follows.

$$Dp \ min = \{\mu Bc \div \pi NVn \ (\rho s - \rho n)\}^{1/2} \tag{1}$$

where,

Dp min:     Minimum particle diameter
$\mu$:     Steam viscosity; $1.4 \times 10^{-5}$ kg/m·sec.
Bc:     Steam inlet width; $10^{-3} \times (D2 - D1) \div 2$
D2:     Inner diameter of the outer cylinder (mm)
D1:     Inner diameter of the inner cylinder (mm)
N:     Number of revolutions of steam (Number of turns of fin is generally 1.5 or more)
Vn:     Flow velocity in the still (Flow velocity of spiral portion; m/sec.)
$\rho_s$:     Density of water drops; 950 kg/m
$\rho_n$:     Density of steam; $220 \times \{(P + 1) \div (273 + t_n)\}$
$t_n$:     Temperature of steam (°C)
P:     Pressure in the still (Kgf/cm$^2$).

And, when it is assumed that a flow rate of steam is W and a passage cross section in the still is a, the flow velocity Vn in the still is expressed as follows:

$$Vn = W \div a \ (where, \ a = \{\pi \div 4 \times (D2^2 - D1^2)\} \times 10^{-6}) \tag{2}$$

To reduce the minimum particle diameter of the impurities such as fine particles which can be removed by the centrifugal function, Bc (steam inlet width) may be made small as apparent from the expression (1). To do so, a value of D2-D1 is determined small, namely a difference between the inner diameter of the outer cylinder and the inner diameter of the inner cylinder of the still is needed to be made small.

And, by making Vn (the flow velocity in the still) large in the expression (1), the minimum particle diameter of the impurities such as fine particles which can be removed by the centrifugal function can also be made small. And to do so, as apparent from the expression (2), a value of D2-D1 is determined small, namely a difference between the inner diameter of the outer cylinder and the inner diameter of the inner cylinder of the still is needed to be made small.

In the distillation apparatus of the invention, since a difference (clearance) between the inner diameter of the outer cylinder and the inner diameter of the inner cylinder can be held to a required minimum and the flow velocity of steam in the still can be increased, the minimum particle diameter of the impurities such as fine particles which can be removed by the centrifugal function can be made small.

In the distillation apparatus of the invention, a length of the metal cylinder is preferably large in view of the removal of fine particles and not particularly specified, but the metal cylinder mostly has a length of about 50 to 200 cm, and a thickness of 5 mm to 18 mm because of a condition where it is installed. More preferably, the metal cylinder has a thickness of about 7 mm to 15 mm.

A material of the metal cylinder is preferably stainless steel in view of durability, and various types of stainless steel can be used, and stainless steel 316 and stainless steel 316L are particularly preferably used among others.

The spiral fin formed on the inner cylinder preferably has a width of about 5 to 20 mm, and a spiral pitch can be changed as needed according to the use conditions and preferably set to about 2 to 20 mm/rev.

And, to remove the impurities such as fine particles from steam with high efficiency, an error of mounting the spiral fin to the inner cylinder is desirably ±1 mm/1.5 mm at most, but to achieve precision with such a mounting error, the inner cylinder provided with the spiral fin is preferably produced by cutting the outer periphery of the metal cylinder having a large thickness. When the inner cylinder is produced by cutting, not only the mounting error of the spiral fin to the inner cylinder is made small but also minute irregularity at the mounting portion of the spiral fin is decreased and the surface smoothness of the inner cylinder as the whole is improved, so that it also serves to increase the flow velocity of steam in the still as one of the elements for removing the impurities such as fine particles from steam. Besides, since adsorption of the impurities such as fine particles to the uneven surfaces is prevented with the improvement of the smoothness of the surfaces of the inner cylinder as the whole, the still can be prevented from being contaminated due to the adhesion and sedimentation of the impurities such as fine particles. The smoothness of the surface of the inner cylinder can be improved to about Ra = 1.0.

And, where the inner cylinder with the spiral fin is produced by cutting out of the metal cylinder having a large thickness, an error of amounting the spiral fin to the inner cylinder can be made ±1 mm/1.5 mm at most, a mounting error of the spiral fin to the inner cylinder is decreased, the minute irregularity at the mounting portion of the spiral fin is reduced, and the surface smoothness of the inner cylinder as the whole is improved, so that the impurities such as fine particles can be removed from steam with high efficiency. When the surface smoothness of the inner cylinder as the whole is improved, the adsorption of the impurities such as fine particles to the surface irregularity can be suppressed, so that the still can be prevented from being contaminated due to the adhesion and sedimentation of the impurities such as fine particles. The smoothness of the surface of the inner cylinder can be improved to about Ra = 1.0.

As means to cut the outer periphery of the metal cylinder, for example an NI lathe which cuts under control by a computer is used preferably in view of accurate cutting, but the NC lathe is not specified particularly.

Besides, when the inner cylinder having the spiral fin formed on the outer periphery is electropolished, since the minute irregularity on the surface can be removed substantially, the surface smoothness is further improved, and the impurities such as fine particles can be removed from steam with higher efficiency. And, since the impurities such as fine particles is prevented from being adsorbed to the irregularity of the surface of the inner cylinder, the still can be further prevented from being contaminated by adhesion and sedimentation of the impurities such as fine particles. When the surface is further electropolished, the surface smoothness of the inner cylinder can be improved to about Ra = 0.5.

The tube pipe of a heat-exchanging section to convert the feed water, which is passed through the inner cylinder, to steam is preferably a seamless pipe in view of the prevention of contamination, and the tube pipe which is passed through the preheating device for preheating the feed water and the condenser for cooling the distilled water are also desired to be a seamless pipe in view of the prevention of contamination.

And, connecting piping for connecting the still, the preheating device and the condenser in a prescribed order is preferably made to have a construction without a trap by adopting a flange or special union.

And, the outer surface of the outer cylinder is preferably surrounded by a heat insulating material such as rock wool so that a heat-retention efficiency of the still as the whole is enhanced and the percentage heat exchange of steam and feed water is not lowered.

The "feed water", as the subject of the invention, was obtained by pretreating suspended matters and colloidal substances contained in raw water by coagulation, sedimentation and filtering by means of a coagulating vessel or a two-layered filter, and removing most soluble substances such as ion and fine particles by a combination of a reverse osmosis equipment or a double-floor and triple-tower type ion exchange equipment and a mixed bed ion exchange tower, and it is desired to have an electric conductivity of 1.0 $\mu$s/cm or below.

Steam supplied to the still is saturated steam and does not contain oil, dust or the like; and cooling water supplied to the condenser is desired not to contain particles having a particle diameter of 30 $\mu$m or more and hardness of 5 dH or below.

Besides, in the distillation apparatus of the invention, a plurality of preheating devices and condensers can be connected as required, and the thin pipe disposed in the condenser may be a straight pipe in view of the prevention of the condenser from being contaminated.

And, in the distillation apparatus of the invention, measuring equipment such as a particle counter, a conductivity meter, a thermometer and a pressure gage for checking the quality of the produced distilled water can be connected further to measure and record the quality of the produced distilled water, and the distillation apparatus as the whole can also be controlled by a microcomputer for example.

The distillation apparatus of the invention can be used to obtain water for medical and drug manufacturing use by treating feed water and to thermally sterilize and separate and refine a liquid substance from which impurities are required to be removed as well.

BRIEF DESCRIPTION OF THE DRAWINGS

Fig. 1 is a perspective view showing one embodiment of the distillation apparatus of the invention.

Fig. 2 is a schematic diagram showing a construction of the distillation apparatus shown in Fig, 1 and its internal structure.

Fig. 3 is a schematic diagram showing the internal structure of a still of the distillation apparatus shown in Fig. 1.

BEST MODE FOR CARRYING OUT THE INVENTION

Embodiments of the invention will be described with reference to the drawings.

Like parts in the respective drawings are designated by like reference numerals.

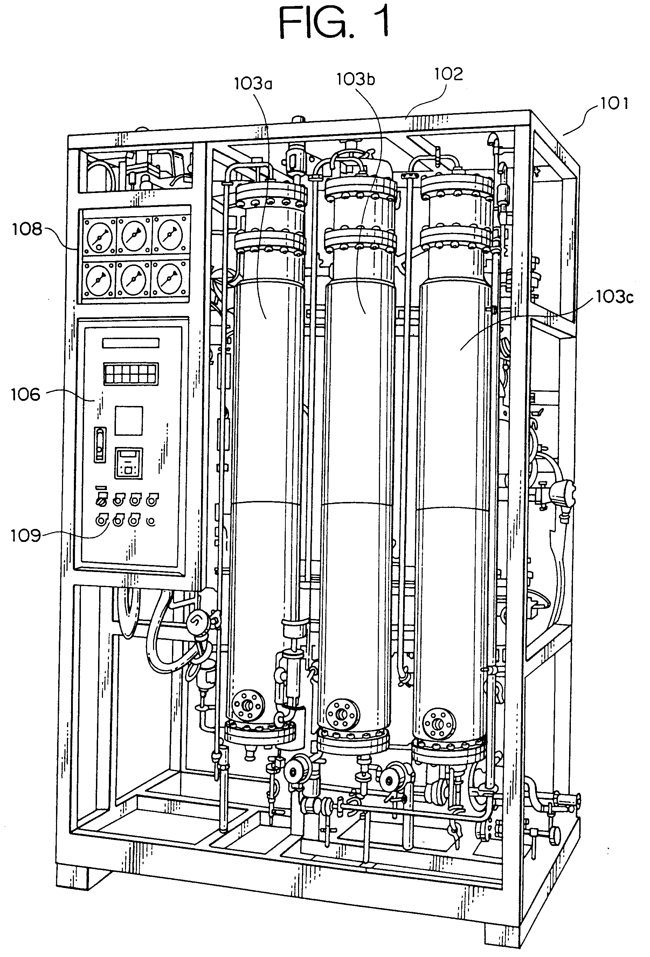

Fig. 1 is a diagram showing one embodiment of the distillation apparatus of the invention.

In Fig. 1, a distillation apparatus 101 has three stills 103a, 103b and 103c which are fixed to a frame 102, and unillustrated condensers 104 and 105 are disposed behind the three stills. And, a preheating device 107 for heating feed water is disposed on the back of a control panel 106, and the preheating device 107, the stills 103a, 103b and 103c, and the condensers 104, 105 are respectively placed in position to form the distillation apparatus. And, to construct the distillation apparatus 101, water-residing regions in the respective structures such as the stills, the preheating device, the condensers and connecting piping are formed an inclination of 1/100 or more (a slope of 1 cm in 100 cm) to enable the complete removal of water from the respective structures. Besides, the control panel 106 is provided with a control having a microcomputer, and the distillation apparatus 101 is automatically managed and controlled so to keep optimum operating conditions. And, the operating conditions of the distillation apparatus 101 are externally shown by a display 108 in real time. The distillation apparatus 101 can be operated manually as required by operating an operating element 109 formed on the distillation apparatus 101.

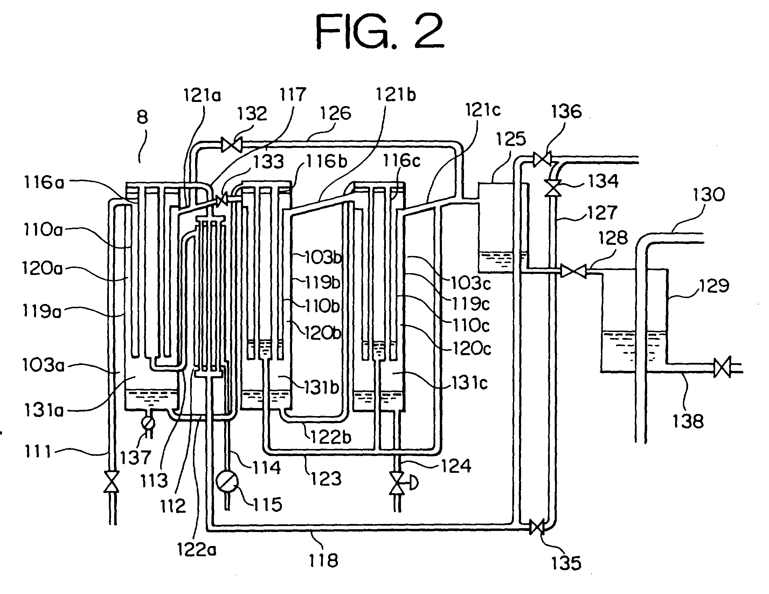

Fig. 2 schematically shows a construction of the distillation apparatus shown in Fig. 1 and its internal structure.

Steam piping 111 for supplying saturated steam from an unillustrated boiler is connected to the upper part of an internal cylinder 110a of the first still 103a. And, connecting piping 113 for supplying a preheating device 112 with the saturated steam which is supplied from the unillustrated boiler into the inner cylinder 110a is connected to the lower part of the inner cylinder 110a. A drainpipe 114 for discharging the supplied saturated steam is connected to the lower part of the preheating device 112. A valve 115 is adjusted to keep the inner pressure of the preheating device 112 constant.

Water supply piping 117, which is connected to a tube pipe 116a having its one end penetrated through the inner cylinder 103a for evaporating the feed water preheated in the preheating device 112 while feeding it downward, is connected to the upper part of the preheating device 112, and water supply piping 118 for supplying the feed water to the preheating device 112 is connected to the lower part of the preheating device 112.

Steam piping 121a, which connects the upper part of a steam passage 120a which is formed between an outer cylinder 119a and the inner cylinder 110a of the first still 103a and the upper part of the inner cylinder 110b of the second still 103b and supplies the saturated steam, which is raised between the outer cylinder 119a and the inner cylinder 110a of the first still 103a, to the upper part of the inner cylinder 110b of the second still 103b, is connected to the upper part of an inner cylinder 110b of the second still 103b. And, water supply piping 122a, which has its one end connected to the bottom of the outer cylinder 119a of the first still 103a, is connected to a tube pipe 116b of the second still 103b, which evaporates while feeding downward drainage produced on the bottom of the outer cylinder 119a of the first still 103a. Distilled water collecting piping 123 which collects the distilled water produced on the bottom of the inner cylinder 110b of the second still 103b is connected to the bottom of the inner cylinder 110b of the second still 103b.

Steam piping 121b, which connects the upper part of a steam passage 120b, which is formed between the outer cylinder 119b and the inner cylinder 110b of the second still 103b with the upper part of the inner cylinder 110c of the third still 103c, and supplies the saturated steam, which is raised between the outer cylinder 119b and the inner cylinder 110b of the second still 103b, to the upper part of the inner cylinder 110c of the third still 103c, is connected to the upper part of the inner cylinder 110c of the third still 103c. And, water supply piping 122b, which has its one end connected to the bottom of the outer cylinder 119b of the second still 103b, is connected to a tube pipe 116c of the third still 103c, which evaporates while feeding downward drainage produced on the bottom of the outer cylinder 119b of the second still 103b. The distilled water collecting piping 123, which collects the distilled water formed on the bottom of the inner cylinder 110c of the third still 103c, is connected to the bottom of the inner cylinder 110c of the third still 103c. And, drain piping 124, which discharges drainage produced without being distilled, is connected to the bottom of an outer cylinder 119c of the third still 103c.

Steam piping 121c, which connects the upper part of a steam passage 120c formed between the outer cylinder 119c and the inner cylinder 110c of the third still 103c and a condenser 125 and supplies the saturated steam, which is raised between the outer cylinder 119c and the inner cylinder 110c of the third still 103c, to the condenser 125, is connected to the condenser 125. The distilled water collecting piping 123 joins the steam piping 121c, and the steam piping 121a and the steam piping 121c are mutually connected by a steam passage 126.

The water supply piping 118 which supplies the feed water to the preheating device 112 is passed through the interior of the condenser 125, and the water supply piping 118 in the condenser 125 has a straight structure. And, a bypass passage 127, which does not pass through the condenser 125, is formed on the water supply piping 118. The condenser 125 is connected to a condenser 129 through distilled water piping 128, and straight cooling piping 130 which lets a cooling medium for cooling the distilled water is connected to the condenser 129 so to pass through it.

Now, a process of distilling the feed water by the distillation apparatus 101 configured as described above will be described.

First, saturated steam at 150°C to 180°C under a pressure of 3 to 6 atmospheres is supplied from an unillustrated boiler to the inner cylinder 110a of the first still 103a. And, the saturated steam is also supplied from the inner cylinder 110a into the preheating device 112 through the connecting piping 113. The amount of the saturated steam at the time is the quantity of water equivalent to 50-85 l/hr in the inner cylinder 110a and to 110-220 l/hr in the preheating device 112.

Then, the feed water is passed through the condenser 125 and supplied to the preheating device 112 under an inlet pressure of 4 to 7 atmospheres through the water supply piping 118. At this time, the feed water is generally supplied to the preheating device 112 through the water supply piping 118 only without passing through the bypass passage 127. The feed water preheated to 95°C to 98°C in the preheating device is supplied to the tube pipe 116a which passes through the inner cylinder 110a of the still 103a to supply the feed water downward and evaporate under an inlet pressure of 3.5 to 5.5 atmospheres at the quantity of feed water of 110 to 220 l/hr through the water supply piping 117.

The feed water is moved down through the tube pipe 116a running through the inner cylinder 110a of the still 103a, partly changed to steam in its process by the saturated steam supplied to the inner cylinder 110a, and injected to a splash section 131a. The injected steam rises the steam passage 120a formed between the outer cylinder 119a and the inner cylinder 110a of the first still 103a, and impurities such as fine particles contained in steam are separated in the process by a cyclone effect by a spiral fin formed on the outer periphery of the inner cylinder 110a. The separated impurities such as fine particles are recovered into a pocket formed within the outer cylinder 119a. At the time, the outer cylinder 119a of the still 103a has a pressure of about 3 to 5 atmospheres. The steam, from which the impurities such as fine particles have been separated, is supplied as the saturated steam of 140°C to 165°C and a pressure of 2.7 to 3.8 atmospheres from the upper part of the inner cylinder 110a of the still 103a to the inner cylinder 110b of the second still 103b through the steam piping 121a. The quantity of steam at the time is the quantity of water equivalent to 33 to 66 l/hr. At the time, the steam, from which the impurities such as fine particles have been separated, is not passed through the steam passage 126 but passed through the steam piping 121a only and supplied to the inner cylinder 110b of the second still 103b.

On the other hand, the feed water, which was not changed to steam by the saturated steam supplied to the inner cylinder 110a of the first still 103a, becomes drainage on the bottom of the outer cylinder 119a of the still 103a, and is supplied to the tube pipe 116b, which runs through the inner cylinder 110b of the second still 103b and supplies the feed water downward and evaporate, through the water supply piping 122a which is connected to the bottom of the outer cylinder 119a of the first still 103a.

And, the steam component supplied to and liquefied in the preheating device 112 is discharged outside from the bottom of the preheating device 112 through the drain piping 114.

In the second still 103b, the feed water supplied under an inlet pressure of 2.7 to 3.7 atmospheres at 80 to 150 l/hr is moved downward through the tube pipe 116b which runs through the inner cylinder 110b of the second still 103b, partly changed to steam in its process by the saturated steam supplied to the inner cylinder 110b, and injected to a splash section 131b. The injected steam rises the steam passage 120b formed between the outer cylinder 119b and the inner cylinder 110b of the second still 103b, and impurities such as fine particles contained in steam are separated in the process by a cyclone effect by a spiral fin formed on the outer periphery of the inner cylinder 110b. The separated impurities such as fine particles are recovered into a pocket formed within the outer cylinder 119b. At the time, the outer cylinder 119b of the still 103b has a pressure of about 1.7 to 3 atmospheres. The steam, from which the impurities such as fine particles have been separated, is supplied as the saturated steam of 130°C to 144°C and a pressure of 1.7 to 3 atmospheres from the upper part of the inner cylinder 110b of the still 103b to the inner cylinder 110c of the third still 103c through the steam piping 121b. The quantity of steam at the time is the quantity of water equivalent to 33 to 66 l/hr.

On the other hand, the feed water, which was not changed to steam by the saturated steam supplied to the inner cylinder 110b of the second still 103b, becomes drainage on the bottom of the outer cylinder 119b of the still 103b, and is supplied to the tube pipe 116c, which runs through the inner cylinder 110c of the third still 103c and supplies the feed water downward and evaporate, through the water supply piping 122b which is connected to the bottom of the outer cylinder 119b of the second still 103b.

And, the steam component supplied to and liquefied in the inner cylinder 110b of the second still 103b is collected as distilled water into the condenser 125 at 30 to 33 l/hr from the bottom of the inner cylinder 110b through the distilled water collecting piping 123.

In the third still 103c, the feed water supplied under an inlet pressure of 0.7 to 1.2 atmospheres at 40 to 44 l/hr is moved downward through the tube pipe 116c which runs through the inner cylinder 110c of the third Still 103c, partly changed to steam in its process by the saturated steam supplied to the inner cylinder 110c, and injected to a splash section 131c. The injected steam rises the steam passage 120c formed between the outer cylinder 119c and the inner cylinder 110c of the third still 103c, and impurities such as fine particles contained in steam are separated in its process by a cyclone effect by a spiral fin formed on the outer periphery of the inner cylinder 110c. The separated impurities such as fine particles are recovered into a pocket formed within the outer cylinder 119c. At the time, the outer cylinder 119c of the still 103c has a pressure of about 0.7 to 1.2 atmospheres. The steam, from which the impurities such as fine particles have been separated, is supplied as steam of 115°C to 123°C and a pressure of 0.7 to 1.2 atmospheres from the upper part of the inner cylinder 110c of the still 103c to the condenser 125 through the steam piping 121c. The quantity of steam at the time is the quantity of water equivalent to 33 to 66 l/hr.

On the other hand, the feed water which was not changed to steam by the saturated steam supplied to the inner cylinder 110c of the third still 103c becomes drainage on the bottom of the outer cylinder 119c of the still 103c, and is discharged outside through the drain piping 124 on the bottom of the outer cylinder 119c of the still 103c.

And, the steam component supplied to and liquefied in the inner cylinder 110c of the third still 103c is collected as distilled water into the condenser 125 at 33 to 66 l/hr from the bottom of the inner cylinder 110c through the distilled

8

water collecting piping 123. Finally, the distilled water collected in the condenser 125 is supplied to the condenser 129 through the distilled water piping 128, cooled by a cooling power of the cooling medium passing through the cooling piping 130, and finally produced as distilled water.

Now, a process of sterilizing by the distillation apparatus 101 configured as described above will be described.

First, the distilled water is drained from the condensers 125 and 129. As described above, since the condensers 125 and 129 are also provided with an inclination of 1/100 or more, distilled water can be discharged completely from the condensers 125 and 129.

Then, a valve 132 fixed to the steam passage 126 is opened, while a valve 133 fixed to the steam piping 121a is closed. And, it is configured that valves 134 and 135 fixed to the bypass passage 127 are opened, and a valve 136 fixed to the water supply piping 118 is closed, so that feed water bypasses the condenser 125 through the bypass passage 127 so to be supplied to the preheating device 112 by the water supply piping 118.

Then, saturated steam of 150°C to 180°C and a pressure of 3 to 6 atmospheres is supplied from the unillustrated boiler to the inner cylinder 110a of the first still 103a through the steam piping 111. And, the saturated steam is also supplied from the inner cylinder 110a to the preheating device 112 through the connecting piping 113. The quantity of saturated steam at the time is the quantity of water equivalent to 50 to 85 l/hr in the inner cylinder 110a and 110 to 220 l/hr in the preheating device 112.

Then, the feed water which has passed through the bypass passage 127 is supplied to the preheating device 112 at an inlet pressure of 4 to 7 atmospheres through the water supply piping 118. The feed water which was preheated to 95°C to 98°C in the preheating device 112 is supplied through the water supply piping 117 under an inlet pressure of 3.5 to 5.5 atmospheres with the quantity of feed water of 110 to 220 l/hr to the tube pipe 116a which runs through the inner cylinder 110a of the still 103a to supply the feed water downward and evaporate at the same time.

The feed water is moved down through the tube pipe 116a running through the inner cylinder 110a of the still 103a, partly changed to steam in its process by the saturated steam supplied to the inner cylinder 110a, and injected to the splash section 131a. The injected steam rises the steam passage 120a formed between the outer cylinder 119a and the inner cylinder 110a of the first still 103a, and impurities such as fine particles contained in steam are separated in its process by a cyclone effect by a spiral fin formed on the outer periphery of the inner cylinder 110a. The separated impurities such as fine particles are recovered into the pocket formed within the outer cylinder 119a. At the time, the outer cylinder 119a of the still 103a has a pressure of about 3 to 4.5 atmospheres. The steam, from which the impurities such as fine particles have been separated, is supplied as the saturated steam of 140°C to 165°C and a pressure of 2.7 to 3.7 atmospheres from the upper part of the inner cylinder 110a of the still 103a to the condenser 125 through the steam passage 126. The quantity of steam at the time is the quantity of water equivalent to 33 to 66 l/hr.

On the other hand, the feed water which was not changed completely to steam by the saturated steam supplied to the inner cylinder 110a of the first still 103a becomes drainage on the bottom of the outer cylinder 119a of the still 103a, and discharged outside through a drain piping 137 connected to the bottom of the outer cylinder 119a of the first still 103a.

And, the steam component supplied to and liquefied in the preheating device 112 is discharged outside from the bottom of the preheating device 112 through the drain piping 114.

The saturated steam supplied to the condenser 125 is supplied to the condenser 129 through the distilled water piping 128, so that the condenser 125 and the condenser 129 are sterilized by the saturated steam. The saturated steam also sterilizes a pure side containing a distilled water supply pipe 138 and discharged outside.

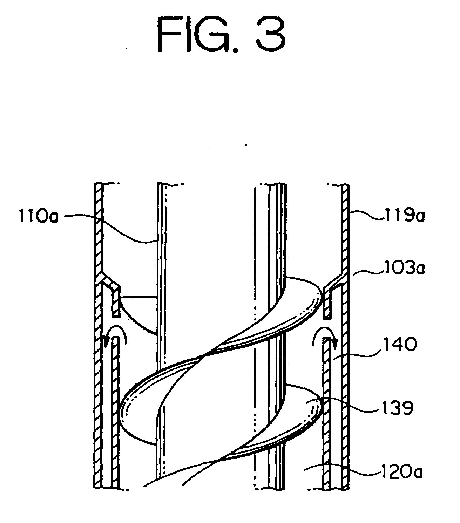

Now, the inner structure of the still of the distillation apparatus of the invention is shown in Fig. 3. The inner structure of the still was described with reference to the still 103a of the distillation apparatus 101, and it is to be understood that the still 103b and the still 103c have also the same structure.

In Fig. 3, a sign 103a denotes a still, 119a an outer cylinder configuring the still 103a, and 110a an inner cylinder concentrically inserted into the outer cylinder 119a. A sign 139 is a spiral fin formed on the outer periphery of the inner cylinder 110a, which gives a cyclone effect to steam which rises through a stem passage 120a formed between the outer cylinder 119a and the inner cylinder 110a of the still 103a. A sign 140 is a pocket formed on the inner periphery of the outer cylinder 119a to catch fine particles removed from steam by the cyclone effect. And, not only the inner cylinder 110a having the spiral fin 139 but also all inner liquid contact portions of the still 103a are electropolished so to reduce a surface resistance further and to achieve the prevention of contamination due to adhesion of the impurities such as fine particles.

In the still 103a configured as described above, the inner cylinder 110a concentrically inserted into the outer cylinder 119a is produced so to have the spiral fin 139 on its outer periphery by cutting out of a stainless steel cylinder having a length of 1400 cm, a diameter of 125 cm and a thickness of 1 cm (Toyo Stainless Steel Kogyo Kabushiki Kaisha, SUS316 Series) by an NC lathe (Ohsumi Kabushiki Kaisha, LB-15). The spiral fin 139 formed on the outer periphery of the inner cylinder 110a has a width of 7 mm and a pitch of 11 mm/rev.

Since the spiral fin 139 on the outer periphery of the inner cylinder 110a is not welded as done conventionally but formed by cutting a stainless steel cylinder, the inner cylinder 110a has a smooth surface and is free from any uneven spots which are formed on the joint between the inner cylinder and the fin by welding. And, as to an error in fabricating, an error of fixing the spiral fin to the inner cylinder by conventional welding was substantially improved from ±2.5 mm/3 mm to the maximum of ±1 mm/1.5 mm.

Therefore, in the distillation apparatus according to the invention, the flow of steam rising the steam passage 120 formed between the outer cylinder 119a and the inner cylinder 110a of the still 103a becomes uniform and fast as compared before and, therefore, the efficiency of the cyclone effect given to steam is increased. As a result, the efficiency of separating the impurities such as fine particles from steam by the distillation apparatus of the invention becomes considerably high as compared with the distillation apparatus using a conventional still.

And, since the flow of steam rising the steam passage 120a becomes uniform and fast as compared with the conventional distillation apparatus and a heat value that steam loses while rising the steam passage 120 is decreased, the percentage heat exchange to convert the feed water, which is fed through an unillustrated tube pipe running through the inner cylinder 110a, into steam is increased. Therefore, the preheating device was conventionally disposed in the same quantity to correspond with one still, but the distillation apparatus of the invention enables to dispose one preheating device.

Furthermore, the inner cylinder 110a having the fin 139 and the interior of the still 103a can be prevented from being contaminated due to adhesion of impurities such as fine particles.

The distillation apparatus 101 described above has three stills, but the number of steps of the stills is not particularly defined in the distillation apparatus of the invention.

Then, in order to study the capacity of the distillation apparatus described above to remove impurities such as fine particles, it was tested by mixing fine particles into feed water to be supplied to the distillation apparatus and removing the fine particles.

For the feed water supplied to the distillation apparatus, kaolin-diluted solutions prepared by mixing fine particles having a particle diameter of 10 $\mu$m or below, 10 to 25 $\mu$m and 25 $\mu$m or more into an ion exchanged water having an electric conductivity of 1 $\mu$s/cm in quantity of 10000, 1000 and 100 particles/ml (measured by a particle counter, C-1000, made by CLIMET).

In the test, the kalion-diluted solution as the feed water was supplied to the distillation apparatus described above, it was operated for one hour, and the number of fine particles having a particle diameter of 10 $\mu$m or below, 10 to 25 $\mu$m and 25 $\mu$m or more contained in the obtained distilled water was measured. The test was performed a plurality of times independently, and the number of fine particles contained in the distilled water was measured by a particle counter, C-1000, made by CLIMET.

The test resulted in that the number of fine particles contained in the distilled water obtained was 3500, 10 and 1 particle/ml for fine particles having a particle diameter of 10 $\mu$m or below, 10 to 25 $\mu$m and 25 $\mu$m or more, respectively as the average value of measurements of five tests.

Meanwhile, the removal of fine particles was tested for comparison under the same conditions as the embodiment excepting that a conventional still which has an inner cylinder provided with a spiral-shaped fin on the outer periphery by welding.

The test was resulted in that the number of fine particles contained in the distilled water obtained was 5000, 25, and 3 particles/ml for fine particles having a particle diameter of 10 $\mu$m or below, 10 to 25 $\mu$m and 25 $\mu$m or more, respectively as the average value of measurements of five tests.

Then, in order to examine the capacity of the distillation apparatus described above to prevent contamination, ion-exchanged water having an electric conductivity of 1 $\mu$s/cm was supplied to the distillation apparatus, which was operated continuously for five days, and the finally obtained water was tested to measure the number of fine particles contained therein.

The feed water supplied to the distillation apparatus has fine particles having a particle diameter of 10 $\mu$m or more mixed in about 100 particles/ml (measured by a particle counter, C-1000, made by CLIMET). And, the test was performed a plurality of times independently, and the number of fine particles contained in the obtained distilled water was measured by a particle counter, C-1000, made by CLIMET.

The test was resulted in that the number of fine particles having a particle diameter of 10 $\mu$m or more contained in the distilled water obtained was 3 particles/ml as the average value of measurements of five tests.

Meanwhile, a contamination prevention test was made for comparison under the same conditions as the embodiment excepting that a still which has an inner cylinder provided with a spiral-shaped fin on the outer periphery by welding.

The test was resulted in that the number of fine particles having a particle diameter of 10 $\mu$m or more contained in the distilled water obtained was 15 particles/ml as the average value of measurements of five tests.

Then, in order to examine the sterilizing capacity of the distillation apparatus described above, sterilization operation was made on a pure side (the downstream of the condenser 125, including the condenser 125) of the condenser. As a result of the sterilization operation, the pure side of the condenser has reached a temperature of 121°C or more in five minutes, and a sterilization time was satisfactory in 30 minutes. This sterilization time was reduced substantially as compared with an average distillation time of one hour by the conventional distillation apparatus.

It is apparent from above that according to the distillation apparatus of the invention, impurities such as fine particles having a particle diameter of 10 to 50 μm can be removed with high efficiency.

And, according to the distillation apparatus of the invention, contamination of the interior of the distillation apparatus can be suppressed to a minimum limit where it is continuously operated for a long time.

Furthermore, according to the distillation apparatus of the invention, even if the interior of the distillation apparatus is contaminated, washing by flashing can be made with ease, and the sterilization operation can also be made in a short time.

## INDUSTRIAL APPLICABILITY

According to the distillation apparatus of the invention, since the inner cylinder and the spiral fin in the still are produced by cutting the outer periphery of a metal cylinder having a large thickness into the form of a fin, the surfaces of the inner cylinder and the fin are smooth, and irregularity formed on the joint between the inner cylinder and the spiral fin by welding can be suppressed.

And, since an error in fabricating is lowered and a clearance between the inner cylinder and the outer cylinder can be held to a minimum limit, the flow of steam rising through the steam passage formed between the outer cylinder and the inner cylinder of the still is made uniform and high, the efficiency of the cyclone effect given to steam is enhanced, and the efficiency of separating impurities such as fine particles from steam can be improved remarkably.

Furthermore, since the flow of steam rising through the steam passage is made uniform and fast and the heat value lost while steam rises through the steam passage is lowered, the percentage heat exchange to convert the feed water, which is fed to the tube pipe running through the inner cylinder, into steam is increased.

And, since the percentage heat exchange to convert the feed water, which is fed to the tube pipe running through the inner cylinder, into steam is increased, the preheating device can be determined to one.

Besides, since the surface formed on the joint between the inner cylinder and the spiral fin by welding is free from irregularity, the still interior can be prevented from being contaminated by adhesion of impurities such as fine particles.

And, according to the distillation apparatus of the invention, the spiral fin having the maximum mounting error of ±1 mm/1.5 mm is mounted on the inner cylinder in the still and an error of fabricating is decreased and the clearance between the inner cylinder and the outer cylinder can be held to the minimum limit, so that the flow of steam rising through the steam passage formed between the outer cylinder and the inner cylinder of the still is made uniform and fast, the efficiency of the cyclone effect given to steam is enhanced, and the efficiency of separating impurities such as fine particles from steam can be improved remarkably.

In addition, since the flow of steam rising through the steam passage is made uniform and fast and the heat value lost while steam rises through the steam passage is lowered, the percentage heat exchange to convert the feed water, which is fed to the tube pipe running through the inner cylinder, into steam is increased.

And, since the percentage heat exchange to convert the feed water, which is fed to the tube pipe running through the inner cylinder, into steam is increased, the preheating device can be determined to one.

Furthermore, when the liquid contact portions of the distillation apparatus containing the inner cylinder having the fin are electropolished, the surfaces of the liquid contact portions become smooth, so that the distillation apparatus is further prevented from being contaminated due to adhesion of the impurities such as fine particles.

And, in the distillation apparatus of the invention, since the construction of one condenser can be simplified by disposing a plurality of condensers, the interiors of the condensers can be prevented from being contaminated due to impurities such as fine particles.

Besides, in the distillation apparatus of the invention, when the thin pipe in the condenser is a straight pipe, residence of the distilled water in the condenser can be minimized, so that the interior of the condenser can be prevented from being contaminated due to impurities such as fine particles.

And, in the distillation apparatus of the invention, the distilled water is completely discharged from the condensers when sterilizing and no cooling water is passed through the condensers, so that a sterilization temperature on the pure side of the condensers can be increased to a determined temperature without fail, washing by flashing can be achieved satisfactorily, and a sterilizing time can be reduced substantially.

In addition, since the construction of the distillation apparatus as the whole can be simplified, an inexpensive distillation apparatus can be provided.

## Claims

1. A distillation apparatus, comprising a still having an inner cylinder which is produced by cutting a metal cylinder and concealed airtight with a spiral fin formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder.

2. A distillation apparatus, comprising a still having an inner cylinder which is concealed airtight with a spiral fin having an fitting error of ±1 mm/1.5 mm at most formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder.

3. A distillation apparatus, comprising:

multiple steps of stills having an inner cylinder which is produced by cutting a metal cylinder and concealed airtight with a spiral fin formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder;
a preheating device which preheats feed water supplied to the tube pipe of a first-step still;
drain piping which discharges drainage from the bottom of the inner cylinder of the first-step still;
distilled water collecting piping which collects as distilled water the drainage produced on the bottom of the inner cylinder into a second-step still and thereafter;
steam piping which supplies external steam from the upper part of the inner cylinder of the first-step still;
steam piping which connects the upper part of a steam passage formed between the outer cylinder and the inner cylinder and the upper part of the inner cylinder of the next-step still to respective stills from the first-step to the step before the final-step to supply steam raised between the outer cylinder and the inner cylinder of the respective stills to the upper part of the inner cylinder of the next-step still; and
water supply piping, which supplies drainage produced on the bottom of the outer cylinder of the respective stills to a tube pipe of the next step, fixed to the respective stills from the first-step to the step before the final-step;
drain piping, which discharges the drainage from the bottom of the outer cylinder, fixed to the final-step still;
a first condenser which has a thin pipe running through its interior and converts steam into condensed water;
a second condenser which is connected to the first condenser, has a thin pipe running through its interior and converts steam into condensed water; and
steam piping which sends steam from the upper part of the steam passage of the final-step still to the first condenser.

4. A distillation apparatus, comprising:

multiple steps of stills having an inner cylinder which is concealed airtight with a spiral fin having an fitting error of ±/-1 mm/1.5 mm at most formed on its outer periphery, an outer cylinder which is closed tightly with the inner cylinder concentrically inserted therein, and a tube pipe which runs through the inner cylinder to evaporate feed water while sending it down, and giving a cyclone effect to steam which rises between the inner cylinder and the outer cylinder;
a preheating device which preheats feed water supplied to the tube pipe of a first-step still;
drain piping which discharges drainage from the bottom of the inner cylinder of the first-step still;
distilled water collecting piping which collects as distilled water the drainage produced on the bottom of the inner cylinder into a second-step still and thereafter;
steam piping which supplies external steam from the upper part of the inner cylinder of the first-step still;
steam piping which connects the upper part of a steam passage formed between the outer cylinder and the inner cylinder and the upper part of the inner cylinder of the next-step still to respective stills from the first-step to the step before the final-step to supply steam raised between the outer cylinder and the inner cylinder of the respective stills to the upper part of the inner cylinder of the next-step still; and
water supply piping, which supplies drainage produced on the bottom of the outer cylinder of the respective stills to a tube pipe of the next step, fixed to the respective stills from the first-step to the step before the final-step;
drain piping, which discharges the drainage from the bottom of the outer cylinder, fixed to the final-step still;
a first condenser which has a thin pipe running through its interior and converts steam into condensed water;
a second condenser which is connected to the first condenser, has a thin pipe running through its interior and converts steam into condensed water; and

steam piping which sends steam from the upper part of the steam passage of the final-step still to the first condenser.

5. The distillation apparatus according to claims 1 and 3, wherein the metal cylinder is cut out by an NC lathe.

6. The distillation apparatus according to claims 1 through 4, wherein material of the metal cylinder is stainless steel.

7. The distillation apparatus according to claims 1 through 4, wherein the spiral fin has a width of 5 to 20 mm and a pitch of 2 to 20 mm/rev.

8. The distillation apparatus according to claims 1 through 4, wherein the inner cylinder is electropolished.

9. The distillation apparatus according to claims 1 through 4, wherein the thin pipe disposed in the first and second condensers is a straight pipe.

# FIG. 1

# FIG. 2

EP 0 842 684 A1

# FIG. 3

110a

119a

103a

140

139

120a

## INTERNATIONAL SEARCH REPORT

| | International application No. |
|---|---|
| | PCT/JP96/01864 |

| A. CLASSIFICATION OF SUBJECT MATTER |
|---|
| Int. Cl$^6$ B01D1/26; C02F1/04 |

According to International Patent Classification (IPC) or to both national classification and IPC

| B. FIELDS SEARCHED |
|---|
| Minimum documentation searched (classification system followed by classification symbols) |
| Int. Cl$^6$ B01D1/26; C02F1/04 |

| Documentation searched other than minimum documentation to the extent that such documents are included in the fields searched |
|---|
| Jitsuyo Shinan Koho 1926 – 1996 |
| Kokai Jitsuyo Shinan Koho 1971 – 1996 |

| Electronic data base consulted during the international search (name of data base and, where practicable, search terms used) |
|---|
| |

### C. DOCUMENTS CONSIDERED TO BE RELEVANT

| Category* | Citation of document, with indication, where appropriate, of the relevant passages | Relevant to claim No. |
|---|---|---|
| A | JP, T13-981, B1 (Soji Maruyama), August 13, 1924 (13. 08. 24)(Family: none) | |
| A | JP, 62-216695, A (Nitto Denko Corp.), September 24, 1987 (24. 09. 87)(Family: none) | |
| A | JP, 5-228465, A (Shinko Pantec Co., Ltd.), September 7, 1993 (07. 09. 93) & JP, 8-9028, B2 | |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| September 18, 1996 (18. 09. 96) | October 1, 1996 (01. 10. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)